# EUROPÄISCHE PATENTANMELDUNG

(11) **EP 1 710 053 A2**
(43) Veröffentlichungstag der Anmeldung: **11.10.2006**
(21) Anmeldenummer: 06007018.2
(22) Anmeldetag: 01.04.2006
(51) Int. Cl.: B25J 21/02

(54) **Gerät zur Handhabung und/oder Behandlung von Erzeugnissen**

(30) Priorität: 07.04.2005 DE 202005005902 U
(71) Anmelder: M+W Zander Holding AG, 70499 Stuttgart (DE)
(72) Erfinder: Balzer, Andreas, 35638 Leun (DE)
(74) Vertreter: Jackisch-Kohl, Anna-Katharina

(57) **Zusammenfassung**

Das Gerät zur Handhabung und/oder Behandlung von Erzeugnissen hat ein Gehäuse (1) mit Seitenwänden (2 bis 5), in denen eine Durchgriffsöffnung (11, 17 bis 19) vorgesehen ist. An einer der Seitenwände (2 bis 5) ist ein Träger (10, 16) angeordnet, in dem die Durchgriffsöffnung (11, 17 bis 19) angeordnet ist. Um das Gerät so auszubilden, daß es bei einwandfreier Abdichtung des Gehäuses (1) kostengünstig hergestellt werden kann, begrenzt der Träger (10, 16) einen Strömungskanal (35) für ein gasförmiges Medium. Das gasförmige Medium strömt durch den Innenraum des Gehäuses (1), in dem das Erzeugnis gehandhabt bzw. behandelt wird.

## Beschreibung

Die Erfindung betrifft ein Gerät zur Handhabung und/oder Behandlung von Erzeugnissen nach dem Oberbegriff des Anspruches 1.

Beispielsweise im Pharmaziebereich ist es bekannt, empfindliche oder für Menschen gefährliche Produkte gesichert in einem abgeschlossenen Gerät zu handhaben und/oder zu behandeln. Hierzu ist das Gerät in der Seitenwand des Gehäuses mit wenigstens einer Durchgriffsöffnung versehen, an die nach innen ein Handschuh angeschlossen ist, der dicht mit dem Rand der Durchgriffsöffnung verbunden ist. Die Herstellung dieser Geräte ist aufwendig und teuer.

Der Erfindung liegt die Aufgabe zugrunde, das gattungsgemäße Gerät so auszubilden, daß es kostengünstig so hergestellt werden kann, daß das Gehäuse einwandfrei abgedichtet ist.

Diese Aufgabe wird beim gattungsgemäßen Gerät erfindungsgemäß mit den kennzeichnenden Merkmalen des Anspruches 1 gelöst.

Beim erfindungsgemäßen Gerät hat der Träger den Strömungskanal für das gasförmige Medium. Dieses gasförmige Medium strömt durch den Innenraum des Gehäuses, in dem das Erzeugnis gehandhabt bzw. behandelt wird. Eventuell auftretende Verunreinigungen werden vom Luftstrom aufgenommen und durch den Strömungskanal abgeführt. Vorteilhaft wird das gasförmige Medium im Kreislauf innerhalb des Gerätes geführt, so daß das mit Schmutz/Schadstoffteilchen versehene Medium nicht nach außen gelangt.

Vorteilhaft wird für diesen Kreislauf wenigstens eine Ventilatoreinheit eingesetzt, mit der das gasförmige Medium im Kreislauf gehalten wird.

Weitere Merkmale der Erfindung ergeben sich aus den weiteren Ansprüchen, der Beschreibung und den Zeichnungen.

Die Erfindung wird anhand einer in den Zeichnungen dargestellten Ausführungsform näher erläutert. Es zeigen
- Fig. 1: in perspektivischer Darstellung ein erfindungsgemäßes Gerät,
- Fig. 2: in verkleinerter Darstellung eine Seitenansicht des erfindungsgemäßen Gerätes gemäß Fig. 1,
- Fig. 3: eine Ansicht in Richtung des Pfeiles III in Fig. 2,
- Fig. 4: in perspektivischer Darstellung eine Ansicht in Richtung des Pfeiles IV in Fig. 1,
- Fig. 5: in perspektivischer und teilweise in explosiver Darstellung eine andere Ansicht des erfindungsgemäßen Gerätes,
- Fig. 6: in vergrößerter Darstellung einen Schnitt durch einen Teil einer durch eine Tür verschließbaren Abschnitt einer Seitenwand des erfindungsgemäßen Gerätes,
- Fig. 7: in vergrößerter Darstellung einen Teil des Seitenwandabschnittes gemäß Fig. 6.

Das in den Zeichnungen dargestellte Gerät ist ein Isolator, in dem Produkte gehandhabt werden, die vor Verschmutzungen jeglicher Art geschützt werden sollen. Diese Isolatoren werden auch dann eingesetzt, wenn die Bedienungspersonen vor dem handzuhabenden Produkt geschützt werden sollen.

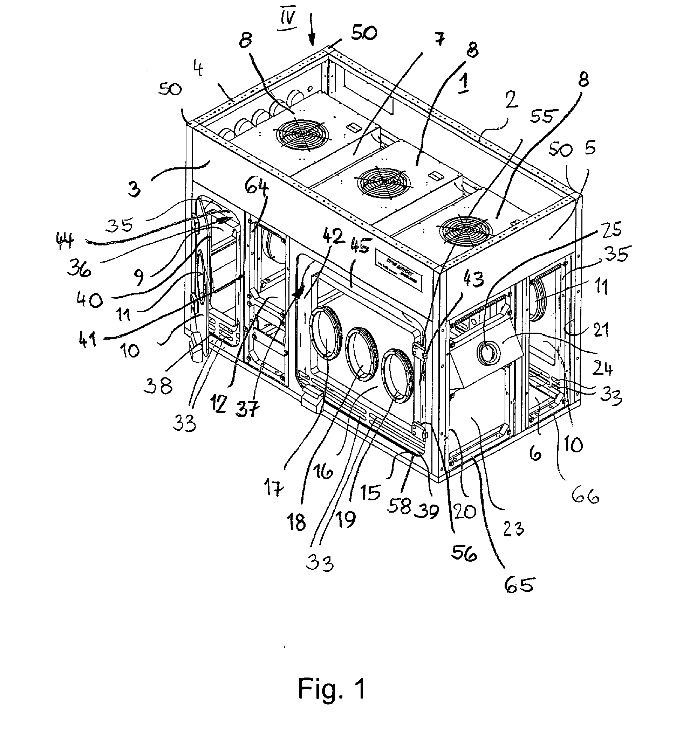

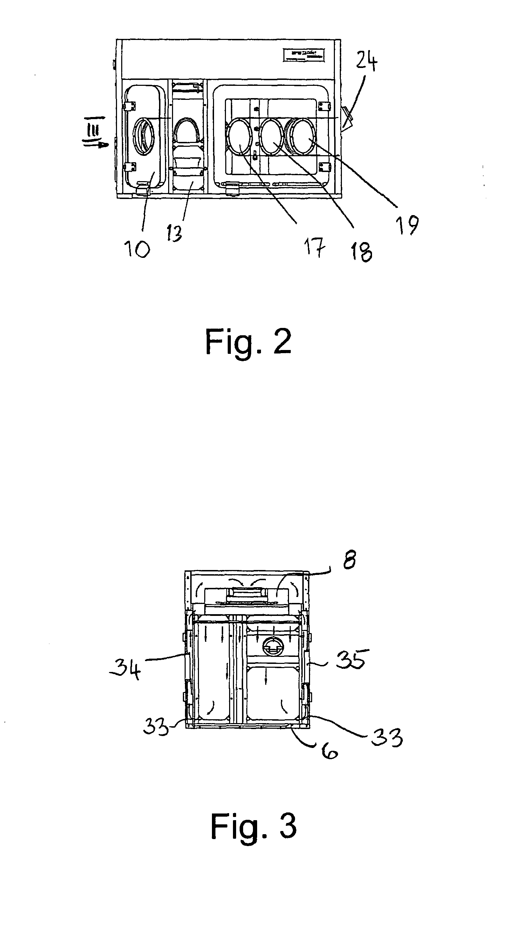

Das Gerät gemäß den Fig. 1 bis 7 hat ein Gehäuse 1 mit zueinander parallelen Längsseitenwänden 2, 3, diese verbindenden Seitenwänden 4, 5, einen Boden 6 und eine Decke 7. Auf der Decke 7 sind im Ausführungsbeispiel drei Ventilatoreinheiten 8 befestigt, die mit geringem Abstand nebeneinander angeordnet sind und sich zwischen den einander gegenüberliegenden, zueinander parallelen Seitenwänden 2, 3 erstrecken. Die Ventilatoreinheiten 8 sind wie die Decke 7 gegenüber dem oberen Rand der Seitenwände 2 bis 5 zurückgesetzt, so daß sie von den Seitenwänden 2 bis 5 überragt werden. Über die Ventilatoreinheiten 8 wird Luft angesaugt und über (nicht dargestellte) Öffnungen in der Decke 7 in das Gehäuse 1 geleitet. Im Gehäuse 1 befinden sich handzuhabende Produkte, beispielsweise pharmazeutische Erzeugnisse. Sie können beispielsweise in Flaschen abgefüllt oder in Verpackungen eingelegt werden. Durch den Luftstrom durch das Gehäuse 1, der in Fig. 3 durch Pfeile gekennzeichnet ist, wird das jeweilige Produkt/Erzeugnis vor Verunreinigungen geschützt. Je nach Anforderungen an das Produkt/Erzeugnis können im Isolator auch Reinraumbedingungen erforderlich sein. In diesem Falle sitzen auf der Decke 7 Filter-Ventilator-Einheiten, die zusätzlich zur Ventilatoreinheit auch einen entsprechenden Filter haben. Die Luft strömt turbulenzarm durch den Innenraum des Gehäuses 1 und wird in noch zu beschreibender Weise zu den Ventilatoreinheiten 8 zurückgeführt.

In der Seitenwand 3 befindet sich benachbart zur schmalen Seitenwand 4 eine Tür 10, mit der eine in einem Rahmen 36 befindliche Öffnung 9 dicht verschlossen werden kann. Sie hat vorteilhaft wenigstens eine Durchgriffsöffnung 11 oder ein Sichtfenster, durch das der Raum hinter der Gehäuseöffnung 9 einsehbar ist.

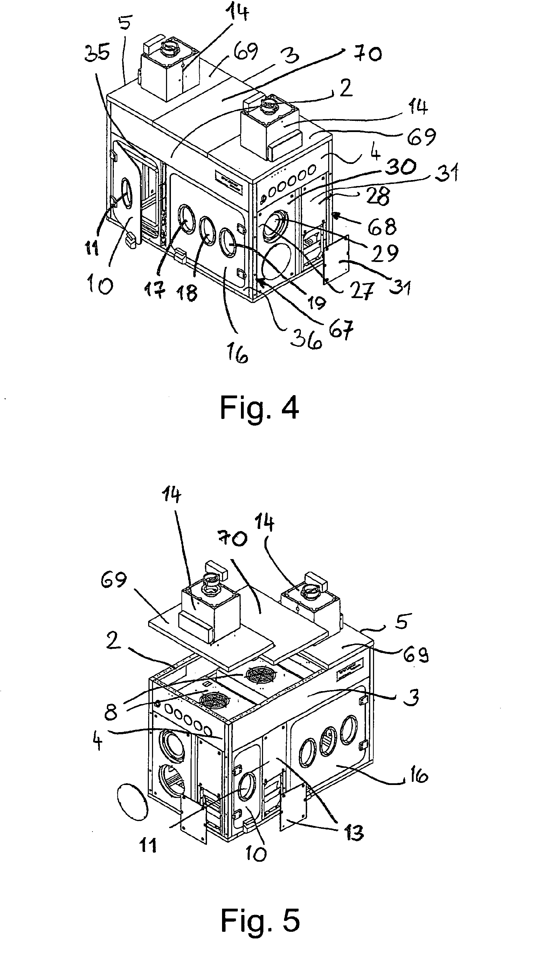

Benachbart zur Tür 10 ist in der Seitenwand 3 eine Öffnung 12 vorgesehen, die durch zwei Schließelemente 13 (Fig. 5) dicht geschlossen ist.

An der von der Tür 10 abgewandten Seite schließt an die Öffnung 12 eine Tür 16 an, mit der eine in einem Rahmen 37 vorgesehene Öffnung 15 dicht verschlossen wird. Die Tür 16 ist um eine vertikale Achse schwenkbar benachbart zur schmalen Seitenwand 5 an der Außenseite der Seitenwand 3 gelagert. In der Tür 16 befinden sich drei nebeneinander auf gleicher Höhe liegende Durchgriffsöffnungen 17 bis 19, durch welche die Bedienungsperson mit ihren Händen und Armen in den Isolator greifen kann, um die darin befindlichen Produkte/Erzeugnisse ergreifen und handhaben zu können. An die Durchgriffsöffnungen 11, 17 bis 19 sind nach innen in bekannter Weise (nicht dargestellte) Handschuhe dicht angeschlossen.

An der gegenüberliegenden Seitenwand 2 sind ebenfalls eine Tür 10 mit einer Durchgriffsöffnung 11 und eine Tür 16 mit drei Durchgriffsöffnungen 17 bis 19 schwenkbar gelagert (Fig. 4). Im Unterschied zur Seitenwand 3 ist ein Sichtfenster zwischen den beiden Türen 10, 16 nicht vorgesehen. Selbstverständlich kann die Seitenwand 2 gleich ausgebildet sein wie die Seitenwand 3. Umgekehrt kann die Seitenwand 3 gleiche Ausbildung haben wie die Seitenwand 2.

In der schmalen Seitenwand 5 befinden sich zwei Rahmen 65, 66 mit Rahmenöffnungen 20 und 21. Die Öffnung 20, die benachbart zur Seitenwand 3 liegt, ist durch ein Schließelement 23 geschlossen. In seiner oberen Hälfte ist es mit einem schräg nach außen gerichteten Produkteinführungselement 24 versehen, das eine Einführöffnung 25 aufweist.

Die Öffnung 21 liegt benachbart zur Seitenwand 2 und wird durch wenigstens ein Schließelement dicht verschlossen.

Die gegenüberliegende schmale Seitenwand 4 ist, wie Fig. 4 zeigt, ebenfalls mit zwei Rahmen 67, 68 mit Rahmenöffnungen 27, 28 versehen, die nebeneinander liegen. Die Rahmenöffnung 27 ist durch ein Schließelement 30 geschlossen, das wenigstens eine Durchgriffsöffnung 29 aufweist. In der Rahmenöffnung 28 befindet sich wenigstens ein Schließelement 31.

Wie sich aus Fig. 3 ergibt, strömt die Luft im Innenraum des Isolators turbulenzarm nach unten und tritt im Bereich des Bodens 6 durch Schlitze 33 in Strömungskanäle 34, 35 ein. In ihnen strömt die Luft, angesaugt durch die Ventilatoreinheiten 8, nach oben und tritt im Bereich oberhalb der Decke 7 aus den Strömungskanälen aus. Die Luft wird von den Ventilatoreinheiten 8 wiederum angesaugt und zurück in den Innenraum des Isolators geführt. Auf diese Weise wird die Luft im Kreislauf innerhalb des Isolators geführt. Eine solche Strömungsführung bietet sich vorteilhaft dann an, wenn das Produkt, das im Isolator gehandhabt wird, nicht in den Aufstellraum des Isolators gelangen darf, weil die Produkte beispielsweise toxisch oder gefährlich sind, oder das Produkt vor Einflüssen der Umgebung geschützt werden muß. Die Ventilatoreinheiten 8 befinden sich unterhalb eines (nicht dargestellten) Dekkels, der auf die Seitenwände 2 bis 5 aufgesetzt ist und den die Ventilatoreinheiten 8 aufnehmenden Raum abschließt.

Die Strömungskanäle 34, 35 bilden Rückführkanäle, die in den Rahmen 36, 37 untergebracht sind. Die beiden Rahmen 36, 37 in den Seitenwänden 2, 3 sind jeweils als Hohlrahmen ausgebildet. Wie Fig. 1 beispielhaft für die Rahmen 36, 37 in der Seitenwand 3 zeigt, sind die Einströmöffnungen 33 im unteren horizontalen Rahmenteil 38, 39 vorgesehen. Die Öffnungen 33 sind beispielhaft nebeneinander und übereinander so angeordnet, daß die Luft aus dem Innenraum des Isolators gleichmäßig in den unteren Rahmenteil 38, 39 strömen kann. Innerhalb dieser Rahmenteile 38, 39 strömt die Luft seitlich in die vertikalen Rahmenteile 40, 41; 42, 43. Von hier strömt die Luft in den oberen Rahmenteil 44, 45, in dem die (nicht dargestellten) Ausströmöffnungen vorgesehen sind.

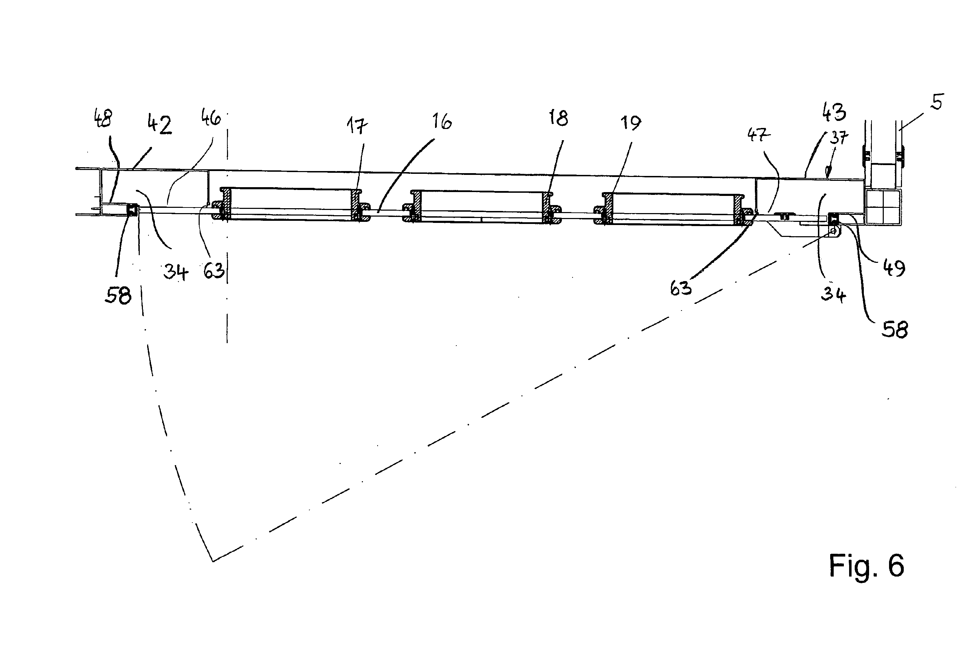

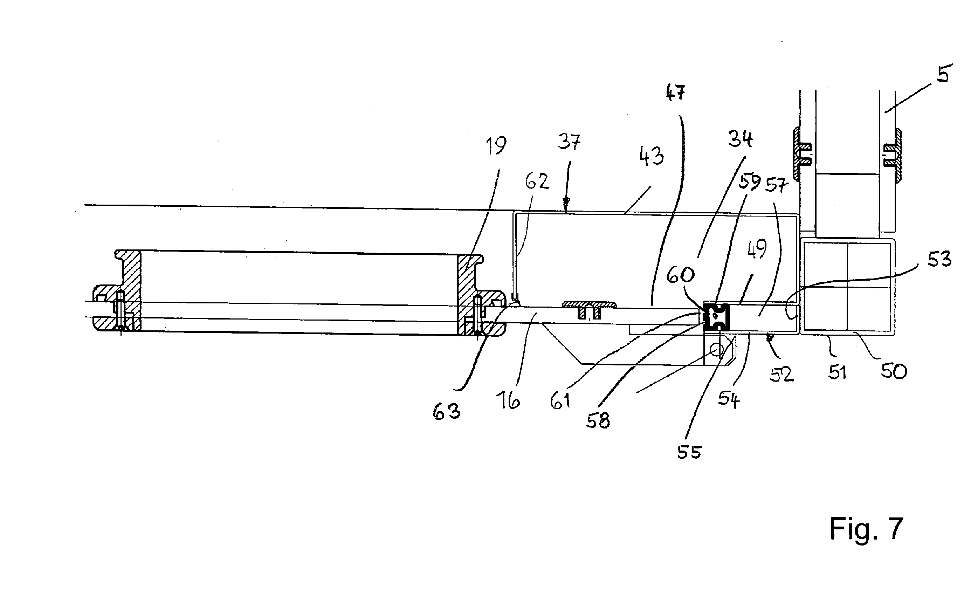

Die Rahmen 36, 37 sind so ausgebildet (Fig. 6 und 7), daß ihre Rahmenteile teilweise offen sind und durch die Türen 10 bzw. 16 geschlossen werden. In den Fig. 6 und 7 ist dies für die Rahmenteile 42, 43 des Rahmens 37 dargestellt. Die Rahmenteile 42, 43 haben rechteckigen Querschnitt und sind auf ihrer Außenseite über ihre Länge mit einer Öffnung 46, 47 versehen. Ist die Tür 16 geschlossen, werden diese Öffnungen 46, 47 durch die Tür 16 geschlossen, so daß die durch die Rahmenteile 42, 43 gebildeten Strömungskanäle 34 geschlossen sind. Auf diese Weise sind sämtliche Rahmenteile der Rahmen 36, 37 ausgebildet. Die Türen 10 und 16 verschließen in Schließstellung die Öffnungen in diesen Rahmenteilen.

Die Rahmenteile 42, 43 haben an ihrer Außenseite jeweils einen Abschnitt 48, 49, der die Öffnung 46, 47 an einer Seite begrenzt. Die Breite der Wandabschnitte 48, 49 ist vorzugsweise kleiner als die Breite der Öffnungen 46,47.

Der Rahmenteil 43 ist an einer Ecksäule 50 befestigt, an der auch die benachbarte Seitenwand 5 gehalten ist. Der Rahmenteil 43 ist so an der Ecksäule 50 befestigt, daß der Wandabschnitt 49 gegenüber der der Seitenwand 3 zugehörigen Außenseite 51 der Ecksäule 50 zurücksteht. An der Ecksäule 50 ist eine L-Schiene 52 mit ihrem kurzen Schenkel 53 so befestigt, daß der lange Schenkel 54 der L-Schiene 52 fluchtend zur Außenseite 51 der Ecksäule 50 liegt (Fig. 7). Auf dem Schenkel 54 sind die Scharniere 55, 56 (Fig. 1) befestigt, an denen die Tür 16 schwenkbar gelagert ist. Der Wandabschnitt 49 des Rahmenteiles 43 und der Schenkel 54 der L-Schiene 52 begrenzen einen schmalen Aufnahmeraum 57, in dem eine Profildichtung 58 untergebracht ist. Die Profildichtung 58 ist als etwa quadratisches Hohlprofilteil ausgebildet, dessen Innenraum 59 an eine Druckmittelquelle angeschlossen ist. Ist die Tür 16 geschlossen, dann wird der Dichtungsinnenraum 59 unter Druck gesetzt, wodurch die dem Türrand 61 benachbarte Seite 60 der Dichtung 58 elastisch nach außen verformt wird und sich dichtend an den Türrand 61 anlegt. Die Profildichtung 58 ist als umlaufende Dichtung ausgebildet, die im Rahmen 36, 37 in der beschriebenen Weise untergebracht ist. Durch Druckbeaufschlagung des Innenraums der Profildichtung 58 legt sich die entsprechende Dichtungsseite 60 an den Türrand an, wodurch eine einwandfreie Abdichtung erreicht wird. Dabei kann die Tür 16 problemlos geöffnet und geschlossen werden. Vor dem Schließen oder Öffnen wird der Dichtungsinnenraum 59 entlastet, wodurch die Dichtungsseite 60 elastisch in ihre Ausgangslage zurückkehrt, in der sie, wie Fig. 7 zeigt, Abstand vom Türrand 61 hat. Die Tür 16 kann dann ohne Gefahr einer Beschädigung der Dichtung 58 geöffnet oder geschlossen werden.

Auf die beschriebene Weise sind vorteilhaft sämtliche Rahmen mit Profildichtungen versehen, die nach dem Schließen der jeweiligen Tür mittels eines Druckmediums, vorzugsweise Druckluft, elastisch so weit verformt werden, daß sie dichtend am Türrand anliegen. Innerhalb des Aufnahmeraumes 57 werden die Profildichtungen in bekannter Weise befestigt.

Der von der Ecksäule 50 abgewandte Rahmenschenkel 62, der senkrecht zur geschlossenen Tür 16 verläuft, endet mit geringem Abstand von der Innenseite der Tür 16. Auf dem freien Ende des Rahmenschenkels 62 sitzt eine Lippendichtung 63, die mit ihrer Dichtlippe dichtend an der Innenseite der Tür 16 in der Schließstellung anliegt. Auf diese Weise wird der Strömungskanal 34 gegen den Innenraum des Isolators abgedichtet. Die Lippendichtung 63 verläuft ebenfalls über den Umfang des Rahmens 37. Auch die anderen Rahmen sind in gleicher Weise mit einer solchen Lippendichtung versehen, die dichtend an der jeweils geschlossenen Tür anliegt.

Der Isolator hat nicht nur die Rahmen, an denen die Türen 10, 16 angelenkt sind, sondern auch die weiteren Rahmen 64 bis 68, welche die Schließelemente 13, 23, 30, 31 umgeben. Sämtliche Rahmen 64 bis 68 können als Hohlrahmen ausgebildet sein, in denen die den Isolator durchströmende Luft vom Bodenbereich nach oben zu den Ventilatoreinheiten 8 geführt wird. Die Rahmen 64 bis 68 sind im Gegensatz zu den mit den Türen 10, 16 versehenen Rahmen allseitig geschlossen.

Die Seiten des Isolators können auf diese Weise mittels der Rahmen 36, 37 und 64 bis 68 modulartig aufgebaut werden. Je nach Anforderungen an den Isolator lassen sich auf diese Weise die Seitenwände mit den verschiedenen Elementen problemlos zusammenstellen. Die Rahmen 36, 37, 64 bis 68 erlauben zudem eine einfache Montage und Demontage des Isolators. In den Ecken des Gehäuses 1 werden die Ecksäulen 50 angeordnet, an welche die benachbarten Rahmen angeschlossen werden. Die Rahmen können außerdem unmittelbar miteinander verbunden werden. Da die Rahmen als Rechteckrahmen ausgebildet sind, lassen sie sich mit ihren ebenen Außenseiten einfach aneinandersetzen und miteinander verbinden.

Da auch die Ventilatoreinheiten 8 als Module ausgebildet sind, ist eine einfache Montage der Ventilatoreinheiten 8 gewährleistet. Im Ausführungsbeispiel sind beispielhaft zwei Antriebseinheiten 14 vorgesehen, die für die Druckhaltung des Isolators sorgen. Die eine Antriebseinheit 14 saugt Umgebungsluft an, während die andere Antriebseinheit 14 die Luft aus dem Isolator nach außen abführt. Soll der Isolatorinnenraum gegenüber der Umgebung im Überdruck oder Unterdruck gehalten werden, arbeiten die beiden Antriebseinheiten 14 so, daß in der Summe der angesaugten und abgeführten Luft der gewünschte Überdruck bzw. Unterdruck im Isolatorinnenraum entsteht. Die Antriebseinheiten 14 sitzen auf jeweils einer Trägerplatte 69. Wie aus den Fig. 4 und 5 hervorgeht, werden die Trägerplatten 69 auf dem oberen Rand der Seitenwände 2 bis 5 befestigt. Zwischen den Trägerplatten 69 ist eine Abdeckplatte 70 angeordnet. Der Isolator kann auch nur eine Antriebseinheit 14 oder mehr als zwei Antriebseinheiten aufweisen. Je nach Länge des Gehäuses 1 sind dann keine oder mehrere Abdeckplatten 70 zwischen den einzelnen Einheiten erforderlich.

Die abgeführte und/oder angesaugte Luft kann statt unmittelbar in die Umgebung in ein Abluftsystem abgegeben oder aus einem Zuluftsystem bezogen werden. Es ist ferner möglich, auf die Antriebseinheiten 14 zu verzichten und die Zufuhr und Abfuhr der Luft einschließlich der Druckregelung durch das Abluft- und Zuluftsystem selbst zu steuern.

Der Isolator wird vorteilhaft im Pharmaziebereich eingesetzt, kann aber allgemein zur Handhabung von gefährlichen Produkten bzw. Substanzen verwendet werden.

Die Türen 10, 16 bestehen vorzugsweise aus durchsichtigem Material, vorzugsweise aus Glas. Dies hat den Vorteil, daß eine Sichtkontrolle der Strömungskanäle 34, 35 in den Rahmen 36, 37 problemlos auch während des Betriebs möglich ist.

## Patentansprüche

1. Gerät zur Handhabung und/oder Behandlung von Erzeugnissen, mit einem Gehäuse mit Seitenwänden, in denen wenigstens eine Durchgriffsöffnung vorgesehen ist, die an einem Träger vorgesehen ist, der an wenigstens einer der Seitenwände angeordnet ist,
**dadurch gekennzeichnet, daß** der Träger (10, 16) wenigstens einen Strömungskanal (34, 35) für ein gasförmiges Medium begrenzt.

2. Gerät nach Anspruch 1,
**dadurch gekennzeichnet, daß** der Träger (10, 16) wenigstens eine Öffnung (46, 47) in einem den Strömungskanal (34, 35) zusammen mit dem Träger (10, 16) begrenzenden Profilteil (38 bis 45) schließt.

3. Gerät nach Anspruch 2,
**dadurch gekennzeichnet, daß** der Profilteil (38 bis 45) Bestandteil eines Hohlrahmens (36, 37) ist, der vorzugsweise eine Öffnung (9, 12) umschließt, die durch den Träger (10, 16) verschließbar ist.

4. Gerät nach einem der Ansprüche 1 bis 3,
**dadurch gekennzeichnet, daß** der Träger (10, 16) aus einer Schließ- in eine Offenstellung verstellbar ist.

5. Gerät nach einem der Ansprüche 1 bis 4,
**dadurch gekennzeichnet, daß** der Träger (10, 16) schwenkbar am Gehäuse (1) gelagert und vorteilhaft schwenkbar mit dem Hohlrahmen (36, 37) verbunden ist.

6. Gerät nach einem der Ansprüche 2 bis 5,
**dadurch gekennzeichnet, daß** der Träger (10, 16) mit seinem Randbereich die vorteilhaft über die Länge des Profilteiles (38 bis 45) verlaufende Öffnung (46, 47) im Profilteil (38 bis 45) verschließt.

7. Gerät nach einem der Ansprüche 1 bis 6,
**dadurch gekennzeichnet, daß** der Strömungskanal (34, 35) durch wenigstens eine vorteilhaft als Hohlprofildichtung ausgebildete Dichtung (58) abgedichtet ist.

8. Gerät nach Anspruch 7,
**dadurch gekennzeichnet, daß** die Dichtung (58) durch ein Druckmedium, vorzugsweise Druckluft, elastisch aufweitbar ist.

9. Gerät, insbesondere nach einem der Ansprüche 1 bis 8,
**dadurch gekennzeichnet, daß** am Rand (61) des Trägers (10, 16) wenigstens eine Dichtung (58) dichtend anliegt.

10. Gerät nach Anspruch 9,
**dadurch gekennzeichnet, daß** die Dichtung (58) elastisch aufweitbar und vorteilhaft an eine Druckmittelquelle angeschlossene ist.

11. Gerät nach Anspruch 9 bis 10,
**dadurch gekennzeichnet, daß** die Dichtung (58) durch Druckbeaufschlagung mit dem Druckmedium am Rand (61) des Trägers (10, 16) dichtend zur Anlage gebracht wird.

12. Gerät nach einem der Ansprüche 7 bis 11,
**dadurch gekennzeichnet, daß** die Dichtung (58) in einem Aufnahmeraum (57) untergebracht ist, der teilweise vom Profilteil (38 bis 45) begrenzt und vorteilhaft durch eine Winkelschiene (52) begrenzt ist, die auf dem Profilteil (38 bis 45) angeordnet ist.

13. Gerät nach Anspruch 12,
**dadurch gekennzeichnet, daß** der Träger (10, 16) an der Winkelschiene (52) schwenkbar gelagert ist und vorteilhaft der Rand (61) des Trägers (10, 16) in Höhe des Aufnahmeraumes (57) liegt.

14. Gerät, insbesondere nach einem der Ansprüche 1 bis 13,
**dadurch gekennzeichnet, daß** der Strömungskanal (34, 35) gegen den Innenraum des Gehäuses (1) durch wenigstens eine Lippendichtung (63) abgedichtet ist.

15. Gerät nach Anspruch 14,
**dadurch gekennzeichnet, daß** die Lippendichtung (63) an der dem Gehäuseinnenraum zugewandten Innenseite des Trägers (10, 16) dichtend anliegt und vorteilhaft an einem gegen den Träger (10, 16) gerichteten Schenkel (62) des Profilteiles (38 bis 45) befestigt ist.

16. Gerät, insbesondere nach einem der Ansprüche 1 bis 15,
**dadurch gekennzeichnet, daß** zumindest eine Seitenwand (2 bis 5) des Gehäuses (1) aus Rahmenmodulen aufgebaut ist.

17. Gerät nach Anspruch 16,
**dadurch gekennzeichnet, daß** die Rahmenmodule Rahmen (36, 37, 64 bis 68) haben, deren Rahmenöffnung durch den Träger (10, 16) verschlossen ist.

18. Gerät nach Anspruch 16 oder 17,
**dadurch gekennzeichnet, daß** die Rahmenöffnung durch wenigstens ein Schließelement (23, 31) verschlossen ist.

19. Gerät nach einem der Ansprüche 1 bis 18,
**dadurch gekennzeichnet, daß** der Träger (10, 16) aus durchsichtigem Material, vorzugsweise aus Glas, besteht.

20. Gerät nach einem der Ansprüche 1 bis 19,
**dadurch gekennzeichnet, daß** am Gehäuse (1) wenigstens eine Ventilatoreinheit (8) vorgesehen ist, die mit dem Strömungskanal (34, 35) strömungsverbunden ist.
